# EUROPÄISCHE PATENTSCHRIFT

(11) **EP 2 596 991 B1**
(45) Veröffentlichungstag und Bekanntmachung des Hinweises auf die Patenterteilung: **16.04.2014**
(21) Anmeldenummer: 13155785.2
(22) Anmeldetag: 10.02.2011
(51) Int. Cl.: B60Q 1/32, B60R 13/04

(54) **Beleuchtbares Bauteil**
Part with lighting
Pièce comportant un éclairage

(30) Priorität: 25.02.2010 CH 2322010
(43) Veröffentlichungstag der Anmeldung: 29.05.2013
(62) Teilanmeldung aus: 11704398.4
(73) Patentinhaber: Weidmann Plastics Technology AG, 8640 Rapperswil (CH)
(72) Erfinder: ENGLERT, Thomas, 8646 Wagen (CH)
(74) Vertreter: Rutz, Andrea

(56) Entgegenhaltungen:
- DE-A1- 4 421 942
- DE-A1- 10 322 187
- DE-A1- 10 332 975
- US-B1- 7 287 892

## Beschreibung

Die Erfindung betrifft ein beleuchtbares Bauteil mit einer Sichtseite, einem die Sichtseite umgebenden Rand und einer Rückseite, umfassend ein flächiges Dekorelement mit wenigstens einem lichtdurchlässigen Bereich und wenigstens einem lichtundurchlässigen Bereich, Beleuchtungsmittel zum Beleuchten des wenigstens einen lichtdurchlässigen Bereichs und wenigstens eine zwischen dem Dekorelement und dem Beleuchtungsmittel angeordnete lichtführende Schicht, die an einer Rückseite des Dekorelementes angebracht ist.

Solche Bauteile sind beispielsweise als Türeinstiegleisten für Fahrzeuge vorgesehen. Sie können an entsprechender Stelle an der Fahrzeugkarosserie beispielsweise mit Rastmitteln angebracht werden. Auf der Oberseite bzw. Sichtseite des Bauteils bildet der lichtdurchlässige Bereich beispielsweise einen Schriftzug oder/und eine Symbolik. Innerhalb des Bauteils sind Beleuchtungsmittel, beispielsweise eine Leuchtfolie, LED's oder dergleichen angeordnet, welche durch die transparente lichtführende Schicht hindurch den lichtdurchlässigen Bereich beleuchten. Das flächige Dekorelement ist hier beispielsweise ein Metallblech, das in einem Spritzgusswerkzeug durch Hinterspritzen mit der lichtführenden Schicht geformt worden ist. Diese Schicht umgibt vorzugsweise die gesamte Rückseite des Dekorelementes.

Bei einem solchen Bauteil besteht nun die Schwierigkeit, dass im montierten Zustand am Rand durch einen in vielen Fällen kaum vermeidbaren Spalt Lecklicht austreten kann, was in der Regel nicht erwünscht ist. Ein solches Lecklicht könnte an sich in einfacher Weise vermieden werden, indem an die lichtführende Schicht ein Rahmen aus einem lichtundurchlässigen Kunststoff angespritzt wird. So offenbart beispielsweise die DE-C-40 06 649 eine Schalterblende, bei welcher an ein flächiges Dekorelement ein transparenter Kunststoff angespritzt ist. Um einen unerwünschten Lichtaustritt zu vermeiden, ist an das Dekorelement zudem ein Blendenkorpus aus lichtundurchlässigem Kunststoff angespritzt. Dieser Kunststoff umgibt den transparenten Kunststoff rahmenförmig. Die EP-A-0 703 051 offenbart ein Bauteil zum Herstellen eines Tastenschalters. An die Rückseite eines Dekorelementes ist eine durchleuchtbare Lichtleitplatte angespritzt. Diese ist von einem lichtundurchlässigen Rahmen umgeben, der an das Dekorelement und die Lichtleitplatte angespritzt ist. Die WO 98/49700 offenbart ein Blendenteil, das einen transparenten Einsatzteil aufweist, der von einem nichttransparenten Material umspritzt ist.

Die genannten Bauteile sind in der Regel Serienteile, die in sehr hohen Stückzahlen hergestellt werden müssen. An solche Bauteile werden die Anforderungen gestellt, dass sie kostengünstig hergestellt werden können und dennoch funktionssicher sind sowie hohen ästhetischen Anforderungen genügen. Insbesondere ist es wesentlich, dass die Sichtseite eine ansprechende Oberfläche besitzt und Lecklicht insbesondere am Rand des Bauteiles vermieden werden kann.

Die DE 10 332 975 A offenbart ein Bauteil nach dem Oberbegriff des Anspruchs 1.

Der Erfindung liegt die Aufgabe zugrunde, ein Bauteil der genannten Art zu schaffen, bei welchem Lecklicht weitgehend vermieden werden kann und das dennoch kostengünstig hergestellt werden kann.

Die Aufgabe wird durch die Merkmale des Anspruchs 1 gelöst. Dabei sind Mittel vorgesehen, welche Licht beim Transport von den Beleuchtungsmitteln durch die wenigstens eine lichtführende Schicht zum genannten Rand hin im Wesentlichen vollständig absorbieren und/oder streuen. Solche Mittel können beispielsweise ein Pigment aufweisen, das beispielsweise in die lichtführende Schicht und/oder in eine Haftschicht und/oder in eine andere Schicht eingebracht ist. Hierbei wird der Umstand zunutze gemacht, dass der Weg des Lichtes vom Beleuchtungsmittel zum lichtdurchlässigen Bereich wesentlich kürzer ist als der Weg zu einer möglichen Leckstelle am Rand des Bauteils. Auf dem vergleichsweise langen Weg zur möglichen Leckstelle kann das Licht im Wesentlichen beispielsweise durch ein solches Pigment im Wesentlichen vollständig absorbiert und/oder gestreut werden. Durch die Streuung kann ein Lecklicht im Wesentlichen vollständig vermieden werden. Das lichtabsorbierende und/oder streuende Mittel kann auch lediglich in einem Teilbereich der lichtführenden Schicht und/oder in der anderen Schicht und/oder der Haftschicht vorhanden sein. Beim erfindungsgemässen Bauteil können somit mögliche Lichtleckstellen grösser ausgebildet sein als bei bekannten Bauteilen. Die Erfindung ermöglicht somit insbesondere die Herstellung von Bauteilen mit grösseren Fertigungstoleranzen, da Licht im Bauteil vor erreichen der möglichen Leckstelle im Wesentlichen vollständig absorbiert und/oder gestreut wird und somit störendes Lecklicht vermieden werden kann. Eine im Wesentlichen vollständige Absorbtion und/oder Streuung liegt dann vor, wenn die Lichtstärke um 90% vermindert wurde, die Lichtstärke an der Leckstelle höchstens noch 10% der im beleuchteten Bereich vorhandenen Lichtstärke, gemessen in cd/m² beträgt. Vorzugsweise ist die Reduktion aber grösser und beträgt vorzugsweise 99%. Beträgt in diesem Fall die Lichtstärke im beleuchteten Bereich 100 cd/m² (Candela), so beträgt sie an der Leckstelle höchstens 10 cd/m² und vorzugsweise höchstens 1 cd/m².

Gemäss einer Weiterbildung der Erfindung ist die Haftschicht an der Rückseite des Dekorelementes. Die Haftschicht und/oder die andere Schicht ist beispielsweise ein Haftvermittler, ein Klebstoff oder ein Lack. Diese Haftschicht ermöglicht eine feste Verbindung der angespritzten lichtführenden Schicht mit dem Dekorelement. Das Dekorelement kann somit vollständig von der lichtführenden Schicht hinterspritzt werden. Die lichtführende Schicht formt somit das flächige Dekorelement während des Spritzgussvorganges. Da das Dekorelement lediglich von der wenigstens einen lichtführenden Schicht hinterspritzt wird, kann eine exakte Formgebung und damit eine Aussenseite bzw. Sichtseite des Dekorelementes gewährleistet werden, welche die gewünschte Form aufweist. Die lichtführende Schicht und das Dekorelement können somit sehr einfach und dennoch präzis als Einheit hergestellt werden. Diese Einheit kann dann mit den Beleuchtungsmitteln und gegebenenfalls einem Gehäuse zusammengefügt werden. Das auf diese Weise hergestellte Bauteil kann zur Herstellung beispielsweise einer Einstiegsleiste, einer Zierleiste, eines Bedienelementes oder einer Taste verwendet werden. Das Dekorelement ist beispielsweise ein Element für ein Kraftfahrzeug, beispielsweise eine Einstiegsleiste, Mittelkonsole, Dachhimmelkonsole, Türe, Türverkleidung oder auch eine Anzeige im Innenraum des Kraftfahrzeugs. Denkbar ist auch eine Ausbildung des Dekorelementes als Schalter oder auch lediglich als Schaltertaste. Denkbar sind auch Anwendungen der Erfindung für beleuchtbare Elemente, beispielsweise für Haushaltgeräte, beispielsweise Kühlschränke, Dampfgarer, Waschmaschinen, Backöfen, Kochherde, Geschirrspülmaschinen oder Möbel und dergleichen.

Nach einer Weiterbildung der Erfindung ist vorgesehen, dass sich das flächige Dekorelement wenigstens teilweise über den genannten Rand erstreckt. Die lichtführende Schicht ist hierbei vorzugsweise ebenfalls so ausgebildet, dass sie sich wenigstens bis in den Rand erstreckt. Vorzugsweise ist dieser Rand umlaufend. Damit kann ein besonders robustes und dennoch ästhetisch ansprechendes Bauteil hergestellt werden.

Die lichtabsorbierenden und/oder lichtstreuenden Mittel sind gemäss einer Weiterbildung in der lichtführenden Schicht angeordnet. Diese Mittel weisen beispielsweise und insbesondere ein Pigment auf, das homogen oder inhomogen in einer gespritzten Schicht vorhanden ist. Als Pigment eignen sich insbesondere Titandioxid oder Kobaltblau oder Russ. Nach einer alternativen Ausführung ist vorgesehen, dass das lichtabsorbierende und/oder lichtstreuende Mittel in der Haftschicht und/oder der anderen Schicht an der Rückseite des Dekorelementes angeordnet ist. Die Haftschicht und/oder die andere Schicht können an einer Rückseite des Dekorelementes und/oder an einem anderen an die lichtführende Schicht angrenzenden Bestandteil des Bauteils wie z.B. die Oberfläche eines Gehäuses angeordnet sein und/oder das Material, aus welchem ein solcher Bestandteil besteht, weist die lichtabsorbierenden und/oder lichtstreuenden Mittel auf. Die Haftschicht kann beispielsweise durch einen Haftvermittler (z.B. schwarz eingefärbter Heisssiegellack), beispielsweise einen Klebstoff (z.B. schwarz eingefärbter Klebstoff auf Epoxybasis oder Polyurethanbasis) oder beispielsweise durch einen Lack (z.B. schwarz eingefärbter Polyesterlack) gebildet sein. Die genannte andere Schicht ist beispielsweise eine Folie (z.B. eine schwarze Polyethylenfolie), beispielsweise eine galvanische Schwarzchrombeschichtung oder eine Schicht aus Titancarbonitrid oder Titanoxidnitrid.

Erfindungsgemäß ist die Rückseite des flächigen Dekorelementes lichtabsorbierend ausgebildet. Eine Haftschicht und/oder eine andere Schicht sind nicht zwingend. Die Rückseite des Dekorelementes ist durch chemische Modifikation wie z.B. Nitrieren und damit Einbringen von Stickstoff lichtabsorbierend ausgebildet.

Nach einer Weiterbildung der Erfindung ist vorgesehen, dass zwischen dem Dekorelement und der lichtführenden Schicht eine transparente Folie angeordnet ist, die sich wenigstens über den lichtdurchlässigen Bereich des Dekorelementes erstreckt. Diese transparente Folie ist vorzugsweise frei von lichtabsorbierenden und/oder lichtstreuenden Mitteln. Damit wird erreicht, dass besonders viel Licht von den Beleuchtungsmittel zum beleuchtbaren Bereich gelangt. Die transparente Folie ist vorzugsweise von der lichtführenden Schicht hinterspritzt und greift vorzugsweise wenigstens teilweise in wenigstens einen Durchbruch des Dekorelementes ein.

Nach einer Weiterbildung der Erfindung ist vorgesehen, dass das Bauteil ein Gehäuse aufweist, mit dem es an einem Gegenstand, beispielsweise einer Karosserie oder dergleichen befestigbar ist. Die Befestigung erfolgt beispielsweise mit Rastmitteln oder dergleichen. Das Gehäuse ist vorzugsweise auch so ausgebildet, dass es das Beleuchtungsmittel aufnehmen kann. Vorzugsweise ist das Gehäuse so ausgebildet, dass es die Beleuchtungsmittel so abschirmt, dass das Licht nach hinten und seitlich nicht austreten kann. Vorzugsweise weisen die Bereiche des Gehäuses, welche an die lichtführende Schicht angrenzen, mindestens teilweise, vorzugsweise gesamthaft eine Haftschicht und/oder eine andere Schicht mit lichtabsorbierenden und/oder lichtstreuenden Mitteln auf und/oder das Material aus welchem das Gehäuse besteht, weist lichtabsorbierende und/oder lichtstreuende Mittel auf.

Vorzugsweise ist das Dekorelement eine Metallfolie oder ein Metallblech, insbesondere eine Stahlfolie oder ein Stahlblech, eine Leichtmetallfolie oder ein Leichtmetallblech.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: schematisch ein Schnitt durch ein erfindungsgemässes Bauteil, das auf einem ebenfalls geschnittenen Teil montiert ist,
- Fig. 2: ein vergrösserter Teilschnitt gemäss Fig. 1,
- Fig. 3: ein Schnitt gemäss Fig. 1, wobei das flächige Dekorelement mit der hinterspritzten lichtführenden Schicht abgehoben ist,
- Fig. 4: schematisch ein Schnitt durch ein montiertes erfindungsgemässes Bauteil nach einer Variante,
- Fig. 5: schematisch ein vergrösserter Teilschnitt nach Fig. 4 und
- Fig. 6: schematisch eine räumliche Ansicht eines montierten erfindungsgemässen Bauteils.

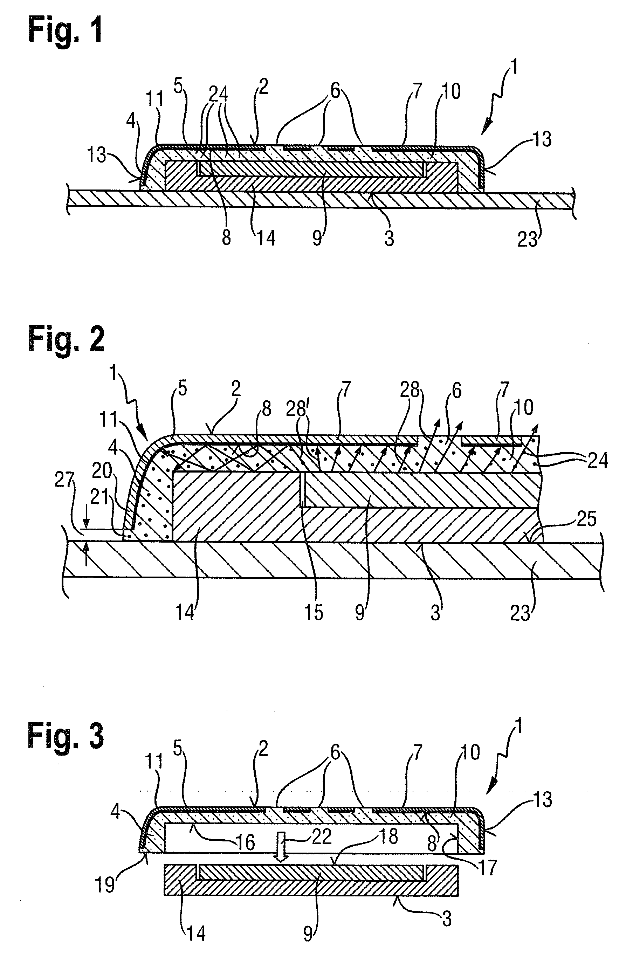

Das in den Figuren 1 und 2 gezeigte Bauteil 1 ist an einer Rückseite 3 auf einem Teil 23, beispielsweise einer Karosserie befestigt. Das Bauteil 1 kann beispielsweise auf einer Oberseite 25 des Teils 23 angeklebt oder auch mechanisch beispielsweise mit hier nicht gezeigten Rastmitteln befestigt sein. Diese Rastmittel können beispielsweise an der Unterseite 3 eines Gehäuses 14 angeordnet sein. Das Bauteil 1 ist beispielsweise eine Einstiegsleiste, eine Zierleiste, ein Bedienelement, beispielsweise für eine Armatur oder zum Herstellen einer Taste vorgesehen. Es besitzt eine Vorderseite 2, welche wenigstens bereichsweise eine Sichtseite bildet, einen die Vorderseite 2 umgebenden Rand 4, der eine Aussenseite 13 besitzt. Der Rand 4 und die Aussenseite 13 sind vorzugsweise umlaufend, was jedoch nicht zwingend ist. Die Vorderseite 2 kann eben sein. Möglich ist aber auch eine Ausführung mit einer unebenen Vorderseite, die beispielsweise Rillen und/oder Rippen aufweist.

Die Vorderseite 2 und vorzugsweise auch die Aussenseite 13 des Randes 4 wird bzw. werden durch ein flächiges Dekorelement 5 gebildet. Dieses ist wie ersichtlich seitlich über den Rand 4 gezogen und erstreckt sich im Wesentlichen bis zur Oberseite 25 des Teils 23. Grundsätzlich ist auch eine Ausführung denkbar, bei welcher das Dekorelement seitlich nicht nach unten gezogen ist. Wie insbesondere die Fig. 2 zeigt, kann zwischen einem umlaufenden Rand 20 des flächigen Dekorelementes 5 und der Oberseite 25 ein Spalt 21 vorhanden sein. Dieser ist in der Regel sehr klein, beispielsweise bevorzugt 0.1 bis 0.2 mm schmal. Vorzugsweise ist der Spalt 21 0.05 bis 1 mm und noch bevorzugter 0.05 bis 5 mm schmal. Der Abstand zwischen dem Rand 20 und der Oberseite 25 ist in der Fig. 2 mit dem Doppelpfeil 27 angedeutet. Ein solcher Spalt 21 kann auch durch eine Unebenheit des Teils 23 an der Oberseite 25 verursacht sein.

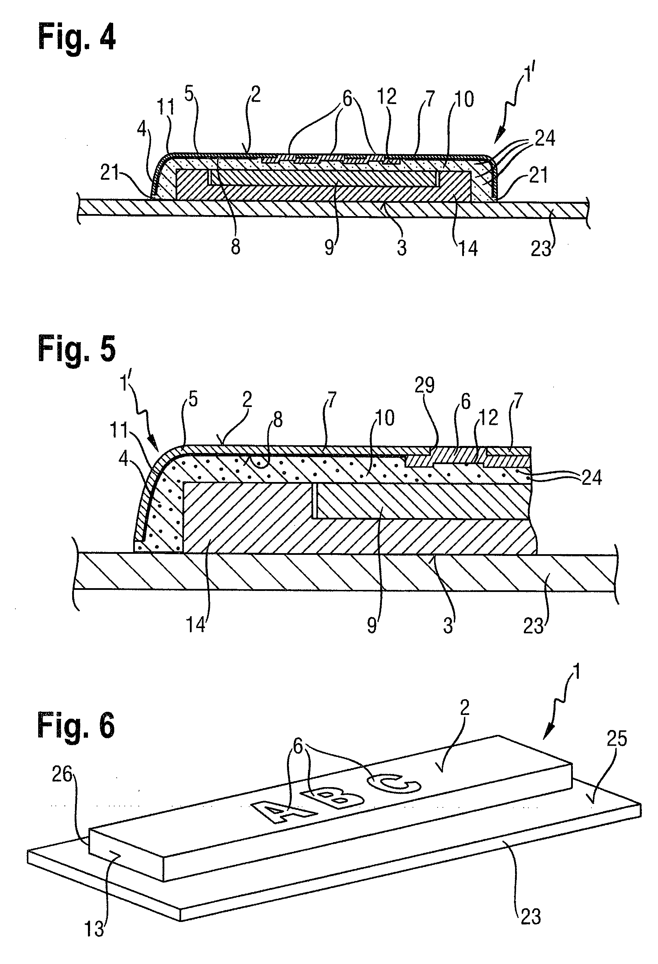

Das Dekorelement 5 besitzt einen lichtdurchlässigen Bereich 6, der beleuchtbar ist, und einen lichtundurchlässigen Bereich 7. Der Bereich 6 kann gemäss Fig. 6 beispielsweise Buchstaben darstellen. Es sind hier aber auch andere beispielsweise symbolische Darstellungen möglich. Der Bereich 6 wird beispielsweise durch Ausstanzungen des Dekorelementes 5 gebildet. Ausserhalb des Bereiches 6 ist das Dekorelement 5 für Licht nicht durchlässig. Dies ist beispielsweise dann der Fall, wenn das Dekorelement 5 aus Metall, beispielsweise aus einem Stahlblech oder Leichtmetallblech hergestellt ist. Grundsätzlich könnte das Dekorelement 5 jedoch auch aus einem lichtundurchlässigen Kunststoff hergestellt sein. Das Dekorelement 5 kann auch mehrschichtig sein.

Das Dekorelement 5 besitzt eine Rückseite 8, auf welcher eine Haftschicht 11 angebracht ist. Diese Haftschicht 11 dient insbesondere dazu, eine angespritzte lichtführende Schicht 10 fest mit dem Dekorelement 5 zu verbinden. Die Haftschicht 11 kann beispielsweise ein Haftvermittler, ein Klebstoff oder ein Lack sein. Diese sind vorzugsweise schwarz eingefärbt. Alternativ kann die Rückseite 8 chemisch behandelt sein. Die Rückseite 8 kann beispielsweise durch Nitrieren absorbierend gemacht werden. Möglich ist auch das Aufbringen einer galvanischen Schwarzchromschicht, einer schwarzen Polyethylenfolie oder eine Schicht aus Titancarbonitrid oder Titanoxidnitrid. Das Dekorelement 5 ist von der lichtführenden Schicht 10 hinterspritzt. Beim Hinterspritzen des Dekorelementes 5 mit der lichtführenden Schicht 10 wird das Dekorelement 5 im Spritzgusswerkzeug entsprechend geformt. Gleichzeitig wird die lichtführende Schicht 10 mit dem Dekorelement 5 verbunden. Wie ersichtlich, erstreckt sich die lichtführende Schicht über die gesamte Rückseite 8 des Dekorelementes 5. Sie bildet den lichtdurchlässigen Bereich 6 und auch den Rand 4 sowie gemäss Fig. 3 eine umlaufende Stirnseite 19. Sie bildet zudem gemäss Fig. 3 eine rückseitige Ausnehmung 17 mit einer vorzugsweise flächigen Innenseite 16. Diese Ausnehmung 17 dient zur Aufnahme von Beleuchtungsmitteln 9, die in einem Gehäuse 14 gelagert sind. Die Beleuchtungsmittel 9 weisen beispielsweise eine lichtleitende Schicht auf, in die mit hier nicht gezeigten LED's Licht eingestrahlt wird. Die Beleuchtungsmittel 9 können aber beispielsweise auch eine Leuchtfolie aufweisen.

Das von den Beleuchtungsmitteln 9 abgegebene Licht gelangt durch die lichtführende Schicht 10 hindurch zum lichtdurchlässigen Bereich 6 und verlässt diesen, wie dies in Fig. 2 mit Lichtstrahlen 28 angedeutet ist. Ein Teil des Lichtes, das vom Beleuchtungsmittel 9 abgegeben wird, tritt hingegen nicht am lichtdurchlässigen Bereich 6 aus, sondern wird gemäss den angedeuteten Strahlen 28' seitlich in die lichtführende Schicht 10 eingestrahlt. Dieses Licht könnte grundsätzlich durch Reflexion bis zum Spalt 21 gelangen, der dadurch eine Leckstelle bilden würde. Um dies zu verhindern, enthält die lichtführende Schicht 10 ein Mittel 24, welches dieses Licht absorbiert und/oder streut. Die Wirkung der Absorbtion und/oder Streuung ist so eingestellt, dass im Wesentlichen kein Licht bis zum Spalt 21 gelangen kann, somit das Licht auf dem Weg zu diesem Spalt 21 im Wesentlichen vollständig absorbiert und/oder gestreut wird. Das Absorbtionsmittel und/oder Streumittel 24 wird beispielsweise durch ein Pigment gebildet, das in der lichtführenden Schicht 10 homogen oder auch inhomogen verteilt ist. Das Absorbtionsmittel 24 kann grundsätzlich auch im lichtdurchlässigen Bereich 6 vorhanden sein. Der Weg, der das Licht vom Beleuchtungsmittel 9 bis zur Vorderseite 2 durchschreitet, ist vergleichsweise kurz, so dass hier die entsprechende Absorbtion und/oder Streuung vernachlässigt werden kann. Wie ersichtlich, ist der Weg von den Beleuchtungsmitteln 9 zum Spalt 21 um ein mehrfaches länger als von den Beleuchtungsmitteln 9 zur Aussenseite 2. Zudem müsste Lecklicht im Bereich einer Kante 26 die Richtung um etwa 90° ändern.

Alternativ oder zusätzlich zum Absorbtionsmittel und/oder Streumittel 24 in der lichtführenden Schicht, kann die Haftschicht 11 mit einem solchen Absorbtionsmittel und/oder Streumitteln versehen sein. Weiter kann auch das Gehäuse 14 mit Absorbtionsmitteln versehen sein. Wesentlich ist somit, dass das nicht am lichtdurchlässigen Bereich 6 austretende Licht auf dem Weg zum Spalt 21 im Wesentlichen vollständig absorbiert und/oder gestreut wird.

Die Figuren 4 und 5 zeigen ein Bauteil 1', das im Wesentlichen dem Bauteil 1 entspricht, jedoch zusätzlich eine Folie 12 aus einem lichtdurchlässigen Kunststoff aufweist. Diese Folie 12 ist von der lichtführenden Schicht 10 hinterspritzt und greift in Öffnungen 29 des Dekorelementes 5 ein. Diese Öffnungen 29 sind beispielsweise Ausstanzungen. Die Vorderseite 2 wird somit bereichsweise durch die hinterspritzte Folie 12 gebildet. Da die Folie 12 lichtdurchlässig ist und vorzugsweise keine Absorbtionsmittel und/oder Streumittel aufweist, wird auf dem Weg zum lichtdurchlässigen Bereich 6 weniger Licht absorbiert und/oder gestreut. Die Folie 12 wird vorzugsweise mit dem Dekorelement 5 in das Spritzgusswerkzeug eingelegt und beim Hinterspritzen der lichtführenden Schicht 10 zusammen mit dem Dekorelement 5 plastisch deformiert. Das Dekorelement 5 muss somit lediglich einmal zum Bilden der lichtführenden Schicht 10 hinterspritzt werden. Hierbei wird durch den Spritzdruck das Dekorelement 5 am entsprechenden Werkzeugteil geformt. Das hinterspritzte Dekorelement 5 wird dann gemäss Fig. 3 in Richtung des Pfeils 22 auf das Gehäuse 14 aufgesetzt, auf dem die Beleuchtungsmittel 9 gelagert sind. Das Bauteil 1 ist nun für die Montage bereit und kann gemäss Fig. 6 auf einem Teil 23 befestigt werden. Gegebenenfalls sind die Beleuchtungsmittel 9 über hier nicht gezeigte Kabel an eine elektrische Stromquelle anzuschliessen.

### BEZUGSZEICHENLISTE

- 1: Bauteil
- 2: Vorderseite
- 3: Rückseite
- 4: Rand
- 5: Dekorelement
- 6: lichtdurchlässiger Bereich
- 7: lichtundurchlässiger Bereich
- 8: Rückseite
- 9: Beleuchtungsmittel
- 10: lichtführende Schicht
- 11: Haftschicht
- 12: Folie
- 13: Aussenseite
- 14: Gehäuse
- 15: Ausnehmung
- 16: Innenseite
- 17: Ausnehmung
- 18: Oberseite
- 19: Stirnfläche
- 20: Rand (Dekorelement)
- 21: Spalt
- 22: Pfeil
- 23: Teil
- 24: Absorbtionsmittel
- 25: Oberseite
- 26: Kante
- 27: Doppelpfeil
- 28: Lichtstrahlen
- 29: Öffnungen

## Patentansprüche

1. Beleuchtbares Bauteil mit einer Sichtseite (2), einem die Sichtseite (2) umgebenden Rand (4) und einer Rückseite (3), umfassend ein flächiges, aus Metall hergestelltes Dekorelement (5) mit wenigstens einem lichtdurchlässigen Bereich (6) und wenigstens einem lichtundurchlässigen Bereich (7), Beleuchtungsmittel (9) zum Beleuchten des wenigstens einen lichtdurchlässigen Bereichs (6) und wenigstens eine zwischen dem Dekorelement (5) und den Beleuchtungsmitteln (9) angeordnete lichtführende Schicht (10), die an einer Rückseite (8) des Dekorelementes (5) angebracht ist, wobei Mittel (24) vorgesehen sind, welche Licht beim Transport vom Beleuchtungsmittel (9) zum genannten Rand (4) im Wesentlichen vollständig absorbieren und/oder streuen, **dadurch gekennzeichnet, dass** die Rückseite des Dekorelementes (5) wenigstens bereichsweise lichtabsorbierend und/oder lichtstreuend ausgebildet ist.

2. Bauteil nach Anspruch 1, **dadurch gekennzeichnet, dass** sich das flächige Dekorelement (5) wenigstens teilweise in den Rand (4) erstreckt.

3. Bauteil nach Anspruch 1 oder 2, **dadurch gekennzeichnet, dass** die lichtführende Schicht (10) sich wenigstens bis in den Bereich des Randes (4) erstreckt.

4. Bauteil nach einem der Ansprüche 1 bis 3, **dadurch gekennzeichnet, dass** die lichtabsorbierenden und/oder lichtstreuenden Mittel (24) in der lichtführenden Schicht (10) angeordnet sind.

5. Bauteil nach einem der Ansprüche 1 bis 4, **dadurch gekennzeichnet, dass** die lichtabsorbierenden und/oder lichtstreuenden Mittel (24) wenigstens ein Pigment umfassen.

6. Bauteil nach einem der Ansprüche 1 bis 5, **dadurch gekennzeichnet, dass** die Rückseite des Dekorelementes (5) durch chemische Modifikation lichtabsorbierend ausgebildet ist.

7. Bauteil nach einem der Ansprüche 1 bis 5, **dadurch gekennzeichnet, dass** an der Rückseite (8) des Dekorelementes (5) eine Haftschicht (11) oder eine andere Schicht angeordnet ist, und dass diese Haftschicht (11) bzw. andere Schicht wenigstens bereichsweise die genannten Mittel für die Lichtabsorbtion und/oder Lichtstreuung aufweist.

8. Bauteil nach einem der Ansprüche 1 bis 7, **dadurch gekennzeichnet, dass** zwischen dem Dekorelement (5) und der lichtführenden Schicht (10) eine transparente Folie (12) angeordnet ist, die sich wenigstens über den lichtdurchlässigen Bereich (6) des Dekorelementes (5) erstreckt.

9. Bauteil nach Anspruch 8, **dadurch gekennzeichnet, dass** die transparente Folie (12) in wenigstens eine Öffnung (29) des Dekorelementes (5) eingreift.

10. Bauteil nach einem der Ansprüche 1 bis 9, **dadurch gekennzeichnet, dass** die lichtführende Schicht (10) an der Rückseite (8) des Dekorelementes (5) angespritzt ist.

11. Bauteil nach einem der Ansprüche 1 bis 10, **dadurch gekennzeichnet, dass** sich die lichtführende Schicht (10) im Wesentlichen über den ganzen Bereich der Rückseite (8) des Dekorelementes (5) erstreckt.

12. Bauteil nach einem der Ansprüche 1 bis 11, **dadurch gekennzeichnet, dass** die lichtführende Schicht (10) einen vergleichsweise schmalen Bereich (21) einer Randaussenseite (13) bildet.

13. Bauteil nach einem der Ansprüche 1 bis 12, **dadurch gekennzeichnet, dass** das Dekorelement (5) eine in einem Spritzgusswerkzeug geformte Folie, beispielsweise Metallfolie, insbesondere Stahlfolie ist.

14. Bauteil nach einem der Ansprüche 1 bis 13, **dadurch gekennzeichnet, dass** es ein Gehäuse (14) aufweist, das im Wesentlichen die Rückseite (3) des Bauteils bildet.

15. Bauteil nach einem der Ansprüche 1 bis 14, **dadurch gekennzeichnet, dass** es beispielsweise zum Herstellen einer Einstiegsleiste, einer Zierleiste, eines Bedienelementes oder einer Taste vorgesehen ist.

16. Bauteil nach einem der Ansprüche 1 bis 15, **dadurch gekennzeichnet, dass** das Dekorelement (5) selbst lichtabsorbierend und/oder lichtstreuend ausgebildet ist.

17. Bauteil nach Anspruch 16, **dadurch gekennzeichnet, dass** das Dekorelement (5) lichtabsorbierende und/oder lichtstreuende Mittel aufweist.

18. Bauteil nach einem der Ansprüche 1 bis 17, **dadurch gekennzeichnet, dass** das Dekorelement (5) mehrschichtig ist.

19. Bauteil nach einem der Ansprüche 1 bis 18, **dadurch gekennzeichnet, dass** das Dekorelement (5) aus Metall hergestellt ist.

20. Bauteil nach Anspruch 19, **dadurch gekennzeichnet, dass** das Dekorelement (5) eine Folie oder ein Blech ist, beispielsweise eine Metallfolie oder ein Metallblech, insbesondere eine Stahlfolie oder ein Stahlblech, eine Leichtmetallfolie oder ein Leichtmetallblech.

## Claims

1. An illuminable component having a visible face (2), an edge (4) surrounding the visible face (2) and a rear face (3) comprising a two-dimensionally extending decorative element (5) made of metal and having at least one translucent region (6) and at least one non-translucent region (7), an illuminating element (9) for illuminating the at least one translucent region (6) and at least one light-guiding layer (10) arranged between the decorative element (5) and the illuminating element (9), said layer being attached to a rear face (8) of the decorative element (5), wherein an element (24) is provided which substantially completely absorbs and/or scatters light when conveyed by the illuminating element (9) to the aforementioned edge (4), **characterized in that** the rear face of the decorative element (5) is at least partially configured to be light-absorbing and/or light-scattering.

2. The component as claimed in Claim 1, **characterised in that** the two-dimensionally extending decorative element (5) extends at least partially into the edge (4).

3. The component as claimed in Claim 1 or 2, **characterised in that** the light-guiding layer (10) extends at least as far as the region of the edge (4).

4. The component as claimed in one of Claims 1 to 3, **characterised in that** the light-absorbing and/or light-scattering element (24) is arranged in the light-guiding layer (10).

5. The component as claimed in one of Claims 1 to 4, **characterised in that** the light-absorbing and/or light-scattering element (24) comprises at least one pigment.

6. The component as claimed in one of Claims 1 to 5, **characterised in that**, by chemical modification, the rear face of the decorative element (5) is configured to be light-absorbing.

7. The component as claimed in one of Claims 1 to 5, **characterised in that** on the rear face (8) of the decorative element (5) an adhesive layer (11) or a further layer is arranged and that said adhesive layer (11) and/or further layer has at least partially the aforementioned element for light absorption and/or light scattering.

8. The component as claimed in one of Claims 1 to 7, **characterised in that** between the decorative element (5) and the light-guiding layer (10) a transparent film (12) is arranged which extends at least over the translucent region (6) of the decorative element (5).

9. The component as claimed in Claim 8, **characterised in that** the transparent film (12) engages in at least one opening (29) of the decorative element (5).

10. The component as claimed in one of Claims 1 to 9, **characterised in that** the light-guiding layer (10) is injection-moulded onto the rear face (8) of the decorative element (5) .

11. The component as claimed in one of Claims 1 to 10, **characterised in that** the light-guiding layer (10) extends substantially over the entire region of the rear face (8) of the decorative element (5).

12. The component as claimed in one of Claims 1 to 11, **characterised in that** the light-guiding layer (10) forms a relatively narrow region (21) of an edge outer face (13).

13. The component as claimed in one of Claims 1 to 12, **characterised in that** the decorative element (5) is a film shaped in an injection-moulding tool, for example a metal film, in particular a steel film.

14. The component as claimed in one of Claims 1 to 13, **characterised in that** it comprises a housing (14), which substantially forms the rear face (3) of the component.

15. The component as claimed in one of Claims 1 to 14, **characterised in that** it is provided, for example, for producing a sill strip, a decorative strip, an operating element or a pushbutton.

16. The component as claimed in one of Claims 1 to 15, **characterised in that** the decorative element (5) itself is configured to be light-absorbing and/or light-scattering.

17. The component as claimed in Claim 16, **characterised in that** the decorative element (5) has a light-absorbing and/or light-scattering element.

18. The component as claimed in one of Claims 1 to 17, **characterised in that** the decorative element (5) is multilayered.

19. The component as claimed in one of Claims 1 to 18, **characterised in that** the decorative element (5) is produced from metal.

20. The component as claimed in Claim 19, **characterised in that** the decorative element (5) is a film or a sheet, for example a metal film or a metal sheet, in particular a steel film or steel sheet, a light metal film or a light metal sheet.

## Revendications

1. Pièce pouvant être éclairée avec un côté visible (2), un bord (4) entourant le côté visible (2) et un côté arrière (3), comprenant un élément décoratif (5) s'étendant en deux dimensions, fabriqué en métal comportant au moins une zone perméable à la lumière (6) et au moins une zone imperméable à la lumière (7), un moyen d'éclairage (9) pour éclairer au moins une zone perméable à la lumière (6) et au moins une couche (10) conductrice de lumière disposée entre l'élément décoratif (5) et les moyens d'éclairage (9), qui est montée sur un côté arrière (8) de l'élément décoratif (5), dans lequel des moyens (24) sont prévus, lesquels absorbent et/ou diffusent essentiellement complètement la lumière lors du transport du moyen d'éclairage (9) jusqu'au dit bord (4), **caractérisée en ce que** le côté arrière de l'élément décoratif (5) est conçu au moins sur des portions d'une manière absorbant la lumière et/ou diffusant la lumière.

2. Pièce selon la revendication 1, **caractérisée en ce que** l'élément décoratif s'étendant en deux dimensions (5) s'étend au moins partiellement dans le bord (4).

3. Pièce selon les revendications 1 ou 2, **caractérisée en ce que** la couche conductrice de lumière (10) s'étend au moins jusqu'à la zone du bord (4).

4. Pièce selon une des revendications 1 à 3, **caractérisée en ce que** les moyens absorbant la lumière et/ou diffusant la lumière (24) sont disposés dans la couche conductrice de lumière (10).

5. Pièce selon une des revendications 1 à 4, **caractérisée en ce que** les moyens absorbant la lumière et/ou diffusant la lumière (24) comprennent au moins un pigment.

6. Pièce selon une des revendications 1 à 5, **caractérisée en ce que** le côté arrière de l'élément décoratif (5) est conçue de manière absorbant la lumière par modification chimique.

7. Pièce selon une des revendications 1 à 5, **caractérisée en ce que** sur le côté arrière (8) de l'élément décoratif (5) une couche adhésive (11) ou une autre couche est disposée, et **en ce que** cette couche adhésive (11) ou l'autre couche présente au moins sur des portions lesdits moyens pour l'absorption de lumière et/ou la diffusion de lumière.

8. Pièce selon une des revendications 1 à 7, **caractérisée en ce que** entre l'élément décoratif (5) et la couche conductrice de lumière (10) un film transparent (12) est disposé, qui s'étend au moins sur la zone perméable à la lumière (6) de l'élément décoratif (5).

9. Pièce selon la revendication 8, **caractérisée en ce que** le film transparent (12) s'engage dans au moins une ouverture (29) de l'élément de décoratif (5).

10. Pièce selon une des revendications 1 à 9, **caractérisé en ce que** la couche conductrice de lumière (10) est moulée par injection sur le côté arrière (8) de l'élément décoratif (5).

11. Pièce selon une des revendications 1 à 10, **caractérisée en ce que** la couche conductrice de lumière (10) s'étend essentiellement sur la surface totale du côté arrière (8) de l'élément décoratif (5).

12. Pièce selon une des revendications 1 à 11, **caractérisée en ce que** la couche conductrice de lumière (10) forme une zone (21) comparativement mince d'un côté extérieur de bord (13).

13. Pièce selon une des revendications 1 à 12, **caractérisée en ce que** l'élément décoratif (5) est un film façonné dans un outil de moulage par injection, par exemple un film de métal, notamment un film d'acier.

14. Pièce selon une des revendications 1 à 13, **caractérisée en ce que** elle présente un logement (14), qui forme essentiellement le côté arrière (3) de la pièce.

15. Pièce selon une des revendications 1 à 14, **caractérisée en ce que** elle est prévue par exemple pour fabriquer une barre d'accès, un enjoliveur, un élément de manipulation ou une touche.

16. Pièce selon une des revendications 1 à 15, **caractérisée en ce que** l'élément décoratif (5) est lui-même conçu de manière absorbant la lumière et/ou diffusant la lumière.

17. Pièce selon la revendication 16, **caractérisée en ce que** l'élément décoratif (5) présente des moyens absorbant la lumière et/ou diffusant la lumière.

18. Pièce selon une des revendications 1 à 17, **caractérisée en ce que** l'élément décoratif (5) est en plusieurs couches.

19. Pièce selon une des revendications 1 à 18, **caractérisée en ce que** l'élément décoratif (5) est fabriqué en métal.

20. Pièce selon la revendication 19, **caractérisée en ce que** l'élément décoratif (5) est un film ou une tôle, par exemple un film de métal ou une tôle de métal, notamment un film d'acier ou une tôle d'acier, un film de métal léger ou une tôle de métal léger.
